Europäisches Patentamt

European Patent Office

Office européen des brevets

(19)

(11) Numéro de publication : **0 152 326 B1**

(12) **FASCICULE DE BREVET EUROPÉEN**

(45) Date de publication du fascicule du brevet :
09.08.89

(21) Numéro de dépôt : 85400136.9

(22) Date de dépôt : 28.01.85

(51) Int. Cl.⁴ : **G 11 B 5/127**, G 11 B 5/31, G 11 B 5/17// G11B5/11

(54) Procédé de réalisation d'une tête magnétique d'écriture.

(30) Priorité : 03.02.84 FR 8401879

(43) Date de publication de la demande :
21.08.85 Bulletin 85/34

(45) Mention de la délivrance du brevet :
09.08.89 Bulletin 89/32

(84) Etats contractants désignés :
BE CH DE FR GB IT LI NL

(56) Documents cités :
PATENTS ABSTRACTS OF JAPAN, vol. 5, no. 150 (P-81)[822], 22 septembre 1981; & JP - A - 56 83823 (FUJITSU K.K.) 08-07-1981
PATENTS ABSTRACTS OF JAPAN, vol. 6, no. 183 (P-143)[1061], 18 septembre 1982; & JP - A - 57 98118 (FUJITSU K.K.) 18-06-1982
PATENTS ABSTRACTS OF JAPAN, vol. 4, no. 156 (P-34)[638], 31 octobre 1980, page 17P31; & JP - A - 55 105 817 (FUJITSU K.K.) 13-08-1980
IBM TECHNICAL DISCLOSURE BULLETIN, vol. 15, no. 2, juillet 1972, pages 516-517, Armonk, New York, US; R.B. WATROUS: "Horizontal thin-film head with symmetrical windings"
PATENTS ABSTRACTS OF JAPAN, vol. 4, no. 18 (E-171), 13 février 1980, page 35E171; & JP - A - 54 157 613 (FUJITSU K.K.) 12-12-1979
PATENTS ABSTRACTS OF JAPAN, vol. 5, no. 1 (P-43)[673], 8 janvier 1981; & JP - A - 55 132 519 (FUJITSU K.K.) 15-10-1980
PATENTS ABSTRACTS OF JAPAN, vol. 5, no. 138 (P-78)[810], 2 septembre 1981; & JP - A - 56 74812 (NIPPON DENSHIN DENWA KOSHA) 20-06-1981

(73) Titulaire : **COMMISSARIAT A L'ENERGIE ATOMIQUE 31/33, rue de la Fédération F-75015 Paris (FR)**

(72) Inventeur : **Lazzari, Jean-Pierre 45, Chemin de Malanot F-38700 Corenc (FR)**

(74) Mandataire : **Mongrédien, André et al c/o BREVATOME 25, rue de Ponthieu F-75008 Paris (FR)**

IBM TECHNICAL DISCLOSURE BULLETIN, vol. 21, no. 12, mai 1979, page 5002, Armonk, New York, US; K.E. PETERSEN: "Thin film magnetic heads"

PATENTS ABSTRACTS OF JAPAN, vol. 5, no. 5 (P-44)[677], 14 janvier 1981; & JP - A - 55 135 321 (FUJITSU K.K.) 22-10-1980

SOVIET INVENTIONS ILLUSTRATED, section EL, semaine C06, 19 mars 1980; & SU - A - 662 961 (ZNAMENSKII OV) 15-05-1979

## Description

La présente invention a pour objet un procédé de réalisation d'une tête magnétique d'écriture et de lecture. Elle trouve une application dans les équipements d'enregistrement magnétique et en particulier dans les mémoires d'ordinateur.

La tête magnétique obtenue par le procédé de la présente invention est du type de celles qui comprennent deux pièces polaires, un double bobinage plat spiralé entourant chacune de ces pièces polaires, et un entrefer comblé par une couche magnétique, celle-ci affleurant au niveau d'une surface plane qui constitue ce que l'on appelle le plan de vol de la tête. Le support magnétique d'enregistrement se déplace relativement à la tête devant l'entrefer, parallèlement au plan de vol. A l'écriture, un courant circulant dans l'enroulement provoque un champ magnétique au niveau de l'entrefer qui entraîne l'inscription d'une information dans le support. Inversement, une information magnétique écrite sur le support en mouvement, induit un champ dans les pièces polaires, donc un courant dans le bobinage et une tension aux bornes de celui-ci qui constitue un signal de mesure. Comme le champ magnétique impliqué dans ces opérations d'écriture et de lecture est parallèle au support d'enregistrement, on parle parfois d'enregistrement magnétique horizontal.

Une telle tête est décrite par exemple dans la demande de brevet japonais n° 56 83823 déposée par FUJITSU K. K. pour « Production for Horizontal Thin Film Magnetic Head », dont l'abrégé a été publié dans Patent Abstracts of Japan vol 5, n° 150 (P-81) (822) 22 Septembre 1981.

Le procédé de fabrication d'une telle tête consiste à coller bout à bout deux fines pièces magnétiques sur un substrat, ces pièces magnétiques étant séparées par une couche non magnétique définissant l'entrefer. Cet ensemble est ensuite usiné pour réduire la hauteur de l'entrefer. Séparément, on constitue un support comprenant un double enroulement entourant deux pièces polaires. Ces deux sous-ensembles sont ensuite collés l'un sur l'autre.

Un tel procédé présente de nombreux inconvénients. Tout d'abord, il exige un montage délicat de pièces de petites dimensions, ce qui le rend peu compatible avec des processus industriels et automatisés. Ensuite, les pièces polaires d'écriture et de lecture ont une largeur, d'une part, importante, ce qui nuit à l'efficacité de la tête et, d'autre part, peu reproductible, ce qui conduit à des dispersions dans les performances. Enfin, le bobinage peut induire des champs parasites dans la couche d'enregistrement.

On connaît par ailleurs, par la demande de brevet japonais JP-A-57 98118, un procédé de réalisation d'une tête magnétique consistant à coller bout à bout deux pièces en verre séparées par un espaceur en alumine, à usiner l'ensemble pour faire apparaître une paroi en alumine verticale, à raser celle-ci et à recouvrir l'ensemble d'une couche isolante, à déposer sur l'ensemble une première couche magnétique, à former un bobinage puis à déposer une seconde couche magnétique et enfin à sectionner la partie inférieure pour faire apparaître la première couche magnétique.

Ce procédé présente encore des inconvénients, liés notamment aux premières opérations qui nécessitent la manipulation de pièces de très petites dimensions et très fragiles.

La présente invention a pour objet un procédé de réalisation d'une tête magnétique qui remédie à ces inconvénients. Faisant appel à des opérations qui relèvent de la technologie des couches minces, ce procédé se prête parfaitement à une automatisation. Ensuite, la largeur des pièces polaires d'écriture et de lecture se trouve être définie par l'épaisseur d'une couche mince, de sorte que cette épaisseur est faible et parfaitement reproductible. Enfin, l'enroulement conducteur se trouve inséré entre deux couches magnétiques et se trouve donc complètement blindé.

De façon précise, la présente invention a pour objet un procédé de réalisation d'une tête magnétique d'écriture et de lecture comprenant les opérations suivantes :

dépôt d'une première couche de matériau magnétique sur un support,

gravure d'un sillon dans cette première couche magnétique, ce sillon ayant la forme d'un huit avec deux boucles ayant en commun une partie centrale rectiligne, la couche magnétique étant préservée à l'intérieur de ces deux boucles et y formant deux pièces polaires centrales séparées par un canal central correspondant à la partie centrale du huit,

comblement du sillon par un matériau électriquement isolant,

gravure dans le matériau isolant d'une gorge formant double sillon spiralé autour respectivement des deux pièces polaires centrales,

dépôt d'une couche conductrice au fond du double sillon et comblement du double sillon par un matériau électriquement isolant,

dépôt d'une couche de matériau isolant,

gravure dans cette couche d'une marche présentant un flanc située en regard du canal central mais légèrement décentrée par rapport à celui-ci,

dépôt d'une couche de matériau magnétique sur la marche ainsi gravée,

gravure de cette couche amagnétique pour ne laisser subsister qu'une paroi perpendiculaire au plan des couches et constituée par la partie de la couche amagnétique déposée sur le flanc de la marche,

dépôt d'une seconde couche de matériau magnétique formant un bossage recouvrant la paroi,

dépôt d'une couche de protection épousant la forme du bossage,

section dans la couche de protection du bossage et de la paroi amagnétique, ce qui fait apparaître deux pièces polaires séparées par un entrefer.

D'autres caractéristiques et avantages de l'invention ressortiront de la description qui va suivre, donnée à titre illustratif, mais nullement limitatif, en référence aux dessins annexés sur lesquels :

les figures 1 à 8 illustrent diverses étapes du procédé de l'invention,

la figure 9 montre en coupe la tête selon l'invention,

la figure 10 montre une vue éclatée de la tête selon l'invention.

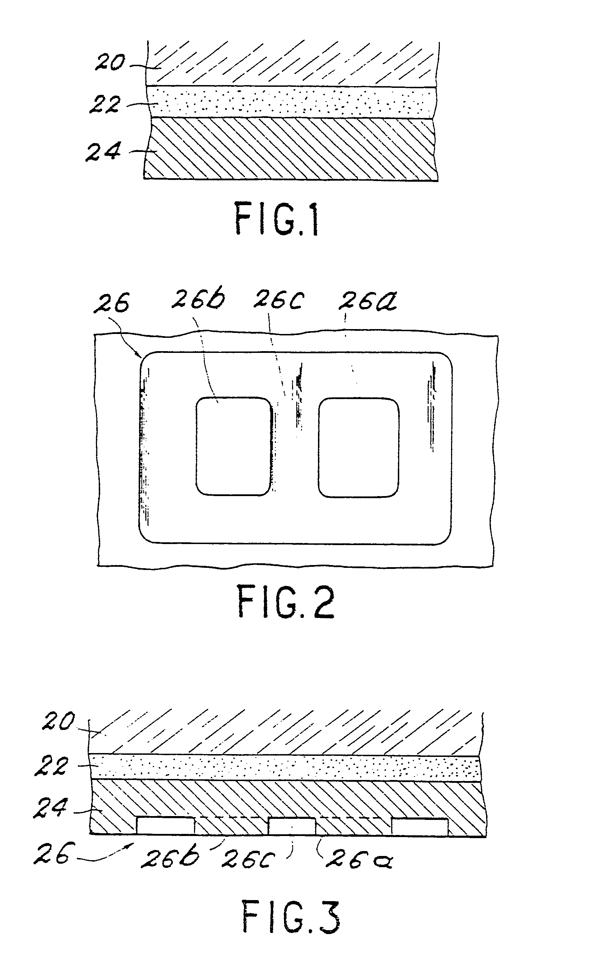

Sur la figure 1, le support 20 peut être soit une céramique, soit un diélectrique, soit une plaquette de silicium semblable à celle qu'on utilise dans la technologie des semi-conducteurs. Dans ce cas, la plaquette est revêtue d'une couche de silice 22 que l'on fait croître par oxydation thermique. une couche 24 est ensuite déposée à l'aide d'un matériau magnétique à forte perméabilité et forte aimantation, tel qu'un ferrite ou un alliage de FeNi ou de Co, zr, Nb. L'épaisseur de cette couche magnétique est comprise entre 0,5 $\mu$m et 5 $\mu$m.

Les figures 2 et 3 montrent un sillon 26 en forme de huit gravé dans la couche 24. La gravure de ce sillon laisse deux pièces polaires centrales 26a et 26b séparées par un canal central rectiligne 26c. Ce sillon 26 est obtenu à l'aide d'un masque de résine réalisé par photolithographie et gravé soit chimiquement, soit par gravure sèche.

La profondeur de gravure du sillon 26 correspond à une fraction de l'épaisseur de la couche 24 (un tiers ou une moitié).

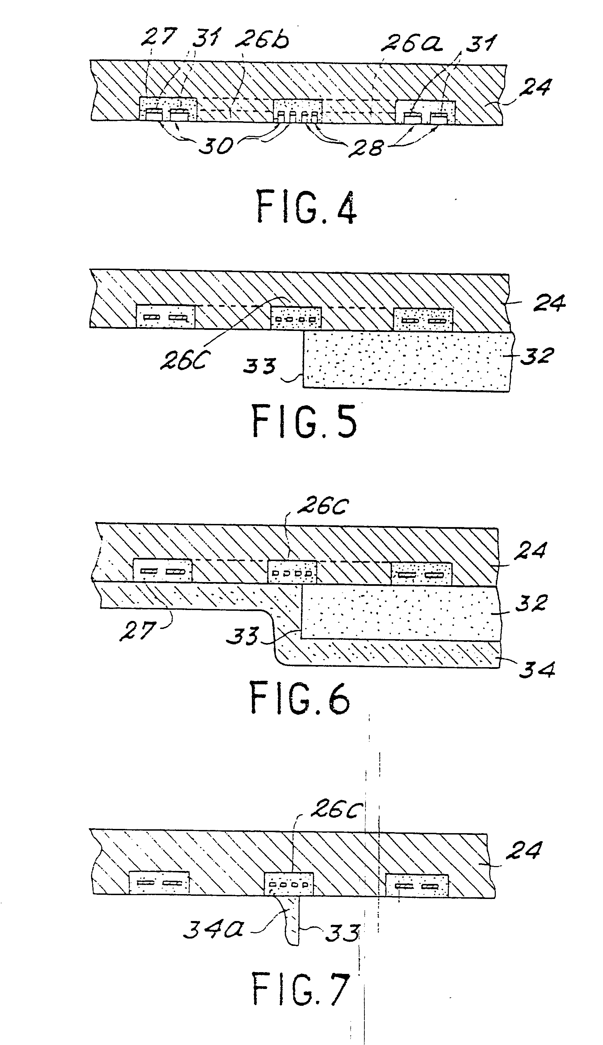

La figure 4 montre le comblement du sillon 26 par un matériau diélectrique 27 comme de la silice ou de la résine. une opération de planarisation bien connue de l'homme de l'art permet de s'assurer que le diélectrique ne se trouve que dans le sillon et non sur la surface de la couche 24.

Un double sillon spiralé 28 et 30 est ensuite pratiqué dans le diélectrique 27 de comblement (fig. 4) On dépose ensuite une couche d'un matériau électriquement conducteur 31 au fond de ce double sillon. Ce matériau peut être du cuivre ou de l'aluminium. On constitue ainsi un bobinage dont le plan est parallèle à la couche d'enregistrement. Le bobinage comprend une moitié 28 entourant la pièce polaire 26a et une moitié 30 entourant la pièce polaire 26b.

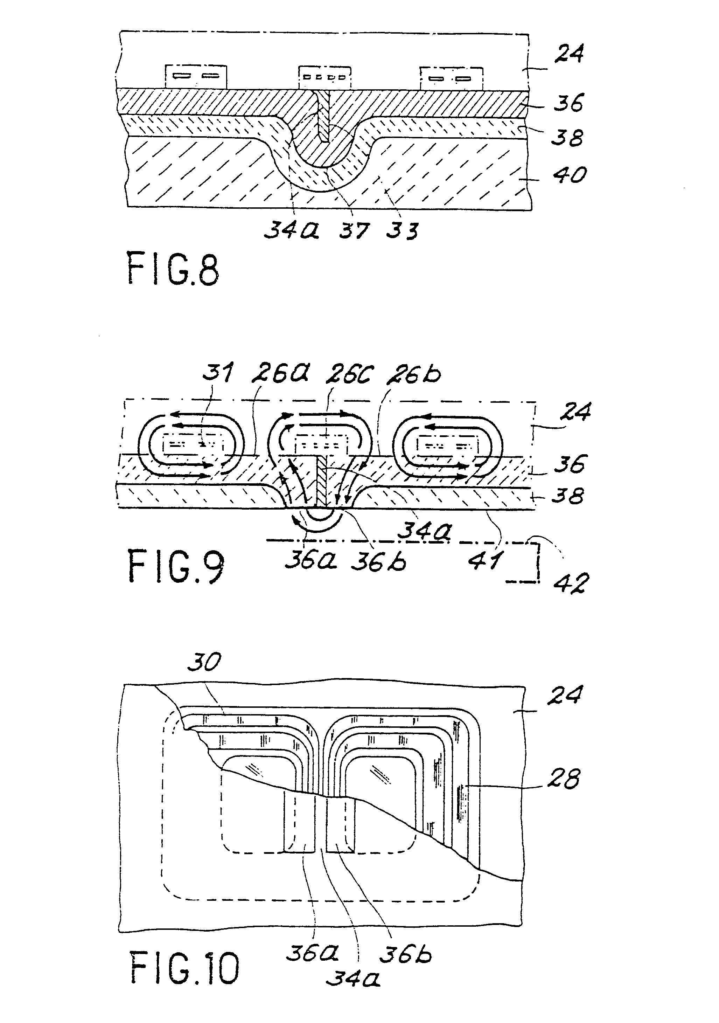

La vue éclatée de la figure 9 montrera mieux la forme de ce bobinage. On voit en particulier que la largeur du conducteur dans la partie centrale du bobinage est plus faible que dans les deux parties latérales, ceci afin d'avoir, dans la première partie, une densité de courant élevée, ce qui contribue à une plus grande efficacité de la tête.

Les deux sillons 28 et 30 sont ensuite comblés par un matériau isolant analogue ou identique au matériau 27.

Une couche diélectrique 32 est ensuite déposée sur l'ensemble. Cette couche est constituée de préférence par une résine photosensible. son épaisseur est comprise entre 0,5 $\mu$m et quelques microns. Par photolithographie, une marche est pratiquée, dont le flanc 33 est décalé par rapport à l'axe du canal central 26c séparant les pôles 26a et 26b. Ce décalage est environ égal à la B 8546.3 RS demi-épaisseur de la couche amagnétique 34 qui est ensuite déposée. Cette couche amagnétique est avantageusement de la silice ou de l'alumine et elle recouvre la marche de résine, comme représenté sur la figure 7.

Par gravure ionique réactive anisotrope et après dissolution de la résine, il reste une paroi verticale 34a d'épaisseur égale ou légèrement inférieure à l'épaisseur de la couche amagnétique 34 et de hauteur égale ou inférieure à l'épaisseur de la couche de résine 32.

On dépose ensuite une couche magnétique 36, qui peut être de même nature que la couche 24. Cette couche 36 forme un bossage au niveau de la paroi 34a, comme on le voit sur la figure 8. On dépose alors sur l'ensemble une couche de protection isolante dure 38, qui peut être en silice ou en alumine. Cette couche épouse le bossage 37.

Enfin, on dépose une couche de résine 40 qui va servir provisoirement pour sectionner les bossages et la paroi 34a. Le sectionnement s'effectue dans la couche 38.

Le sommet de la paroi 34a est alors découvert, réalisant ainsi un entrefer situé entre les deux pièces polaires 36a et 36b. La couche magnétique 36 a une épaisseur comprise entre 0,2 et 1,5 $\mu$m. Elle est donc très mince. Ainsi en est-il des pièces polaires 36a et 36b, dont la largeur est du même ordre que cette épaisseur. C'est ce qui confère à la tête magnétique de l'invention une grande efficacité.

La figure 9 représente la tête obtenue finalement. Les flèches schématisent les lignes de flux à l'écriture dans un support magnétique 42 se déplaçant face au plan de vol 41 constitué par ce qui reste de la couche 38.

Il faut remarquer que les deux parties latérales du bobinage sont magnétiquement blindées par les deux couches 24 et 36 et ne produisent donc aucun champ de fuite vers la couche d'enregistrement 42.

Enfin, la figure 10 montre une vue éclatée de la tête observée face à son plan de vol. Seules les extrémités des deux pièces polaires 36a, 36b d'écriture et lecture séparées par la paroi 34a affleurent au niveau du plan de vol.

## Revendications

1. Procédé de réalisation d'une tête magnétique d'écriture et de lecture, comprenant les opérations suivantes :

dépôt d'une première couche de matériau magnétique (24) sur un support

gravure d'un sillon (26) dans cette première couche magnétique (24), ce sillon ayant la forme d'un huit avec deux boucles ayant en commun une partie centrale rectiligne, la couche magnétique étant préservée à l'intérieur de ces deux boucles et y formant deux pièces polaires centrales (26a, 26b) séparées par un canal central (26c) correspondant à la partie centrale du huit,

comblement du sillon (26) par un matériau électriquement isolant (27),

gravure dans le matériau isolant (27) d'une gorge formant double sillon spiralé (28, 30) autour respectivement des deux pièces polaires centrales (26a, 26b),

dépôt d'une couche conductrice (31) au fond du double sillon (28, 30) et comblement du double sillon par un matériau électriquement isolant (27),

dépôt d'une couche de matériau isolant (32),

gravure dans cette couche d'une marche présentant un flanc (33) située en regard du canal central (26c) mais légèrement décentrée par rapport à celui-ci,

dépôt d'une couche de matériau amagnétique (34) sur la marche ainsi gravée,

gravure de cette couche amagnétique (34) pour ne laisser subsister qu'une paroi (34a) perpendiculaire au plan des couches et constituée par la partie de la couche amagnétique (34) déposée sur le flanc (33) de la marche,

dépôt d'une seconde couche de matériau magnétique (36) formant un bossage (37) recouvrant la paroi (34a),

dépôt d'une couche de protection (38) épousant la forme du bossage,

section dans la couche de protection (38) du bossage (37) et de la paroi amagnétique (34a), ce qui fait apparaître deux pièces polaires (36a, 36b) séparées par un entrefer (34a).

2. Procédé selon la revendication 1, caractérisé par le fait que le support sur lequel est déposée la première couche de matériau magnétique (24) comprend un support conducteur (20) revêtu d'une couche de matériau diélectrique.

3. Procédé selon la revendication 1, caractérisé par le fait que la seconde couche de matériau magnétique (36) a une épaisseur comprise entre 0,2 et 7,5 $\mu$m.

4. Procédé selon la revendication 1, caractérisé par le fait que le matériau isolant constituant la couche (32) dans laquelle une marche est gravée est une résine photosensible susceptible d'être enlevée par dissolution.

## Claims

1. Process for producing a magnetic read-write head, comprising the operations of

depositing a first magnetic material film (24) on a support,

etching a groove (26) in said first magnetic film (24), said groove being shaped like a figure of eight with two loops having in common a rectilinear central portion, the magnetic film being preserved within said two loops and forms there two central pole pieces (26a, 26b) separated by a central channel (26c) corresponding to the central part of the figure of eight,

filling the groove (26) with an electrically insulating material (27),

etching in the insulating material (27) a notch forming a double groove (28, 30) wound respectively around the two central pole pieces (26a, 26b),

depositing a conductive coating (31) at the bottom of the double groove (28, 30) and filling the double groove with an electrically insulating material (27),

depositing an insulating material layer (32),

etching in said layer a step having a side (33) facing the central channel (26c), but which is slightly off-centred with respect thereto,

depositing an amagnetic material film (34) on the thus etched step,

etching said amagnetic film (34) so as to only leave a wall (34a) perpendicular to the plane of the films and constituted by that part of the amagnetic film (34) deposited on the side (33) of the step,

depositing a second magnetic material film (35) forming a boss (37) covering the wall (34a),

depositing a protective coating (38) exactly following the shape of the boss and

cutting the protective coating (38) of the boss (37) and the amagnetic wall (34a), so that two pole pieces (36a, 36b) separated by a gap (34a) appear.

2. Process according to claim 1, characterized in that the support on which is deposited the first magnetic material film (24) comprises conductive support (20) covered with a dielectric material coating.

3. Process according to claim 1, characterized in that the thickness of the second magnetic material film (36) is between 0.2 and 1.5 $\mu$m.

4. Process according to claim 1, characterized in that the insulating material forming the coating (32) in which a step is etched is a photosensitive resin, which can be removed by dissolving.

## Patentansprüche

1. Verfahren zur Herstellung eines magnetischen Schreib- und Lesekopfes, umfassend die folgenden Schritte :

Aufbringen einer ersten Schicht aus einem magnetischen Material (24) auf einen Träger,

Ätzen einer Rille (26) in diese erste magnetische Schicht (24), welche Rille die Form einer Acht mit zwei Schleifen hat, die einen mittleren geradinigen Abschnitt gemeinsam haben, wobei die magnetiscne Schicht im Innern dieser zwei Schleifen erhalten bleibt und dort zwei zentrale Polstücke (26a, 26b) bildet, die durch einen zentralen Kanal (26c), der dem mittleren Abschnitt der Acht entspricht, voneinander getrennt sind,

Auffüllen der Rille (26) mit einem elektrisch isolierenden Material (27),

Ätzen einer Auskehlung, die eine Doppelspiralrille (28, 30) jeweils um die zwei zentralen Polstücke (26a, 26b) bildet, in das isolierende Material (27),

Aufbringen einer leitfähigen Schicht (31) auf den Grund der Doppelrille (28, 30) und Auffüllen der Doppelrille mit einem elektrisch isolierenden Material (27),

Aufbringen einer Schicht aus einem isolierenden Material (32),

Ätzen einer Stufe in diese Schicht, welche Stufe eine Flanke (33) aufweist, die dem zentralen Kanal (26c) gegenübersteht, diesem gegenüber jedoch leicht versetzt ist,

Aufbringen einer Schicht aus amagnetischem Material (34) auf die so geätzte Stufe,

Ätzen dieser amagnetischen Schicht (34), um nur eine Wand (34a) zuruckzulassen, die senkrecht zur Ebene der Schichten ist und die durch den Teil der amagnetischen Schicht (34) gebildet ist, der auf der Flanke (33) der Stufe abgeschieden ist,

Aufbringen einer zweiten Schicht aus magnetischem Material (36), die einen Buckel (37) bildet, der die Wand (34a) bedeckt,

Aufbringen einer Schutzschicht (38), die sich der Form des Buckels angleicht,

Einschneiden in die Schutzschicht (38) des Buckels (37) und der amagnetischen Wand (34a), was zwei Polstücke (36a, 36b) erscheinen läßt, die durch einen Spalt (34a) voneinander getrennt sind.

2. Verfahren nach Anspruch 1, gekennzeichnet durch die Tatsache, daß der Träger, auf den die erste Schicht aus magnetischem Material (24) aufgebracht wird, einen leitfähigen Träger (20) umfaßt, der von einer Schicht aus dielektrischem Material bedeckt ist.

3. Verfahren nach Anspruch 1, gekennzeichnet durch die Tatsache, daß die zweite Schicht aus magnetischem Material (36) eine Dicke zwischen 0,2 und 1,5 $\mu$m aufweist.

4. Verfahren nach Anspruch 1, gekennzeichnet durch die Tatsache, daß das isolierende Material, das die Schicht (32) bildet, in der eine Stufe geätzt wird, ein photoempfindliches Harz ist, das dazu geeignet ist, durch Auflösung entfernt zu werden.

FIG.1

FIG.2

FIG.3

FIG.4

FIG.5

FIG.6

FIG.7

FIG.8

FIG.9

FIG.10